# EUROPEAN PATENT APPLICATION

(11) **EP 1 980 382 A1**
(43) Date of publication of application: **15.10.2008**
(21) Application number: 08007205.1
(22) Date of filing: 11.04.2008
(51) Int. Cl.: B29C 41/06, B29C 41/20, B29C 33/12, B65D 88/76, E03B 3/03

(54) **Machine for rotational moulding and hollow body of plastic material obtained by such machine**

(30) Priority: 12.04.2007 IT PI20070045
(71) Applicant: ZETAPLAST S.p.A., 56010 Vecchiano (IT)
(72) Inventor: Vitarelli, Mario, 56019 Nodica (PI) (IT)
(74) Representative: Celestino, Marco

(57) **Abstract**

Machine (100) for rotational moulding adapted for making a hollow body (10) of thermoplastic material, in particular a reservoir, comprising a hollow mould (50), for example made in two parts (51, 52) that can be coupled to each other, mounted on a support structure (30). The hollow mould (50) is adapted to contain in use a charge (20) of thermoplastic material in powder preliminarily put in and has an outer surface (54) and an inner surface (55), the latter shaped in order to reproduce the shape of the side surface (15) of a desired hollow body (10). During the rotational moulding step, the thermoplastic material (20) contained in the mould (50) is molten by means of heating means. More in detail, the machine (100) has means for actuating the mould (50) in a spatial movement through a combination of rotations about at least one first axis (31) and a second axis (32) orthogonal to each other. This combination of rotations about the axes (31, 32) causes an uniform distribution on the inner surface (55) of the mould (50) of the molten thermoplastic material (20). The machine (100) is, furthermore, equipped with means (53) for constraining a stiff core (25), for example of metal, in the mould (50) near the inner surface (55) thereof. During the moulding step, the stiff core (25) sinks in the molten thermoplastic material and remains thus integrated in the bulk of thermoplastic solid material that is the body of the resulting reservoir (10) [Figure 4].

## Description

### Field of the invention

The present invention relates to a machine for rotational moulding to provide hollow bodies, in particular, reservoirs adapted to be embedded in earth.

Furthermore, the invention relates to a hollow body, in particular a reservoir, obtained by such machine.

### Description of the prior art.

As well known, exists a particular kind of reservoirs that are in use embedded in earth and for this commonly said "underground" used for storing liquid of different nature, in particular, industrial and household sewage, waste liquids of various origin, rainwater, or water for agriculture, industrial or household water.

The reservoirs for use underground are usually of cylindrical shape and are embedded in earth in use with their longitudinal axis arranged horizontally. They can be of concrete, of steel, of reinforced plastic by incorporated fiberglass, or of plastic material according to their conditions of use.

For example, the use of concrete or steel is a forced choice if the reservoir has to bear traffic of vehicles or pedestrians.

However, the reservoirs of concrete are subject with time to crack, whereas the reservoirs of steel under a direct contact with the water are subject with time to corrosion. Therefore, for having reservoirs that are resistant and durable with time, large thicknesses or double walled reservoirs are often used. This negatively affects the overall weight of such reservoirs that, therefore, cannot exceed certain size limits for allowing their transportation and handling working site.

With the adoption of thermoplastic material, in particular polyethylene, the overall weight of the reservoirs for use underground has been remarkably reduced and their costs of production have been limited remarkably.

In particular, these reservoirs are made by rotational moulding, using special machines.

However, the reservoirs of plastic material have a low stiffness to bending, especially for flat surfaces as tops or covers, which are inappropriate when carriageability of the reservoir is necessary.

To overcome this drawback is usually made a slab of reinforced concrete with perimeter higher than the excavation for the reservoir of plastic material. The slab protects the reservoir bearing the loads of vehicles or people that travel on it. Making the slab of reinforced concrete however causes a remarkable complication at starting up the reservoir.

### Summary of the invention

It is then a feature of the present invention to provide a machine for rotational moulding adapted to make a reservoir of plastic material that has a pedestrian and vehicle portion.

It is another feature of the present invention to provide a method for making a reservoir capable of bearing high mechanical actions in order to obtain a pedestrian and vehicle surface.

According to a first aspect of the invention, these and other features are accomplished with one exemplary machine for rotational moulding, according to the invention, for making a hollow body of thermoplastic material, in particular a reservoir, said machine comprising:
- a hollow mould having an outer surface and an inner surface, said inner surface being shaped in order to reproduce the shape of the side surface of said hollow body, said mould being adapted to receive in use a measured amount of a thermoplastic material,
- heating means associated with said mould, said heating means being adapted to cause the thermoplastic material contained in the mould to melt,
- a support structure for the mould,
- means for actuating the mould with respect to the support structure, said means for actuating obtaining a combination of rotations about at least a first and a second axis orthogonal to each other, said combination of rotations being adapted to lay uniformly the molten thermoplastic material on the inner surface of the mould,
whose main feature is to provide, furthermore, means for constraining at least one stiff core to said mould within the mould, said or each stiff core sinking in the molten thermoplastic material during the moulding step in order to be integrated in the structure of the hollow body.

Advantageously, the means for constraining the stiff core in the mould are arranged in a housing made on the outer surface of the mould.

In particular, the means for constraining the stiff core in the mould can be selected from the group comprised of:
- at least one magnet,
- at least one screw,
- at least one nail,
- at least one point of gluing, for example by a point of thermoplastic material,
or a combination thereof.

Advantageously, the stiff core is made of a material selected from the group comprised of:
- metal material,
- plastic material,
- wooden material,
- a combination thereof.

In particular, the stiff core can be selected from the group comprised of:
- a rectilinear segment,
- a curvilinear segment,
- a planar net a determined mesh,
- a three-dimensional net having a determined mesh.

In particular, the stiff core can be a welded net having a desired shape.

Preferably, the means for constraining to said inner surface at least one stiff core comprises at least one magnet arranged around the mould and have a portion that faces the mould at the inner surface. This way, the stiff core adheres to or moves close to the inner surface, without that on the final product the points of connection between the each magnet and the stiff core can be seen.

In particular, the inner surface of the mould can be equipped with at least one groove adapted to determine a stiffening bead on the corresponding portion of the outer surface of the hollow body. In this case, the stiff core can be advantageously engaged in the groove in order to remain embedded in the molten thermoplastic material moulded inside and, then to be incorporated in the resulting hollow body at the stiffening bead once extracted, already in the hardened state, from the mould.

The presence of the stiff core at the stiffening beads increases further the resistance to contraction and to compression of the structure of the hollow body. In particular, the hollow body stiffened by the stiff core allows using the reservoir also in conditions for which it has to be adapted to vehicles of pedestrian transit overcoming thus the limit existing up to now to the use of reservoirs of plastic material.

In particular, the, or each, stiffening bead incorporating the stiff core can be made on the portion of the hollow body that in use works as cover for the reservoir.

According to another aspect of the invention, a method for making a hollow body of plastic material, in particular a reservoir, comprises the steps of:
- introducing a measured amount of a charge of thermoplastic material in a mould having an outer surface and an inner surface, said inner surface being shaped in order to reproduce the shape of the side surface of the hollow body,
- heating the mould in order to cause the charge of thermoplastic material to melt,
- spatial movement of the mould through a combination of rotations about at least a first and a second axis to ensure a homogeneous distribution of the molten thermoplastic material on the inner walls of the mould,
- cooling the mould and extracting the resulting hollow body from said mould,
whose main feature is to provide a preliminary step of engaging at least one stiff core, in particular, of metal, in the mould, near the inner surface of the mould, said stiff core sinking in the molten thermoplastic material during the moulding step in order to be integrated in the structure of the hollow body.

According to a further aspect of the invention, a hollow body, in particular a reservoir, comprising a side surface, a base and a cover and made of a single part of thermoplastic material obtained for rotational moulding has at least one stiff core integrated in the bulk of the thermoplastic material.

In particular, the hollow body has at least one stiffening bead on the external surface. In this case, the stiff core can be advantageously integrated in the bulk of the plastic material at the stiffening bead.

Preferably, the stiff core is integrated in the bulk of the thermoplastic materialof the hollow body at a portion that in use works as cover.

In particular, the hollow body can be selected from the group comprised of:
- a liquid reservoir,
- a Imhoff reservoir,
- a reservoir adapted to be embedded in earth.

Preferably, the thermoplastic material is selected from the group comprised of: polyethylene, polypropylene, PVC, polyamide, polycarbonate, polyurethane, PET, which can be mixed at moulding or overlapped in layers with reinforcing elements such as: foams, fibres, charges.

### Brief description of the drawings.

The invention will be made clearer with the following description of an exemplary embodiment thereof, exemplifying but not limitative, with reference to the attached drawings wherein:
- Figures 1 and 2 show diagrammatically in a partially cross sectional view a machine for rotational moulding, according to the invention, in two different steps of a process for the production of a reservoir;
- Figure 3 shows an partially cross sectioned elevational front view of a reservoir obtained from the machine of figure 1;
- Figure 4 shows diagrammatically a partially cross sectional view of an exemplary embodiment of the machine for rotational moulding of figure 1;
- Figure 4B shows in detail an enlarged view of a portion of the machine of figure 4 for highlighting some structural aspects;
- Figures 5 and 6 show a perspective partially cross sectioned elevational side view of two possible exemplary embodiments of the reservoir of figure 3;
- Figures from 7 to 9 show a perspective view of three possible exemplary embodiments of a stiff core provided in the machine for rotational moulding of figure 1;
- Figure 10 shows a perspective view from below of a mould used in the machine for rotational moulding of figure 1;
- Figure 11 shows a perspective view from below of the stiff core of figure 9 assembled to the mould of figure 10;
- Figure 11B shows diagrammatically a cross sectional view of a possible exemplary embodiment of means for constraining the stiff core;
- Figure 12 shows a perspective elevational side view of the reservoir made by the machine of figure 1 using the mould of the figure.

### Description of preferred exemplary embodiments

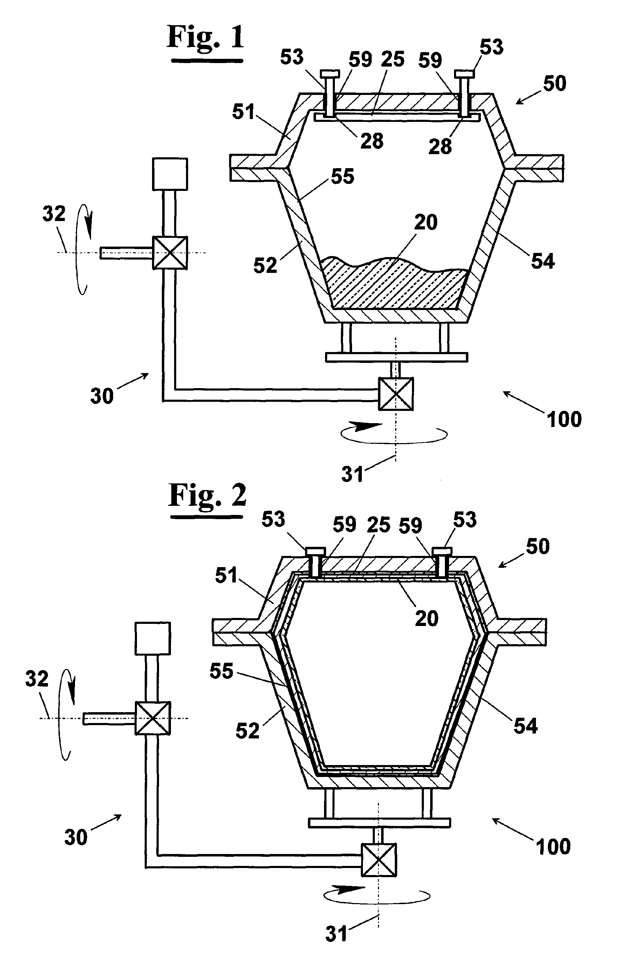

With reference to figures 1 and 2, a machine 100 for rotational moulding adapted for making a hollow body 10 of thermoplastic material, in particular a reservoir, comprises a hollow mould 50, for example made in two parts 51 and 52 that can be coupled to each other, mounted on a support structure 30. The hollow mould 50, in use, is adapted to contain a charge 20 of thermoplastic material in powder preliminarily put in it, and has an outer surface 54 and an inner surface 55, the latter shaped in order to reproduce the shape of the side surface 15 of a desired hollow body 10.

During the rotational moulding step, the thermoplastic material 20 contained in the mould is molten by means of heating means, not shown in the figure for simplicity. More in detail, the machine 100 has means for spatially moving the mould 50 through a combination of rotations about at least one first axis 31 and a second axis 32 orthogonal to each other. This combination of rotations about axes 31 and 32 causes a uniform distribution on the inner surface 55 of the mould 50 of the molten thermoplastic material 20.

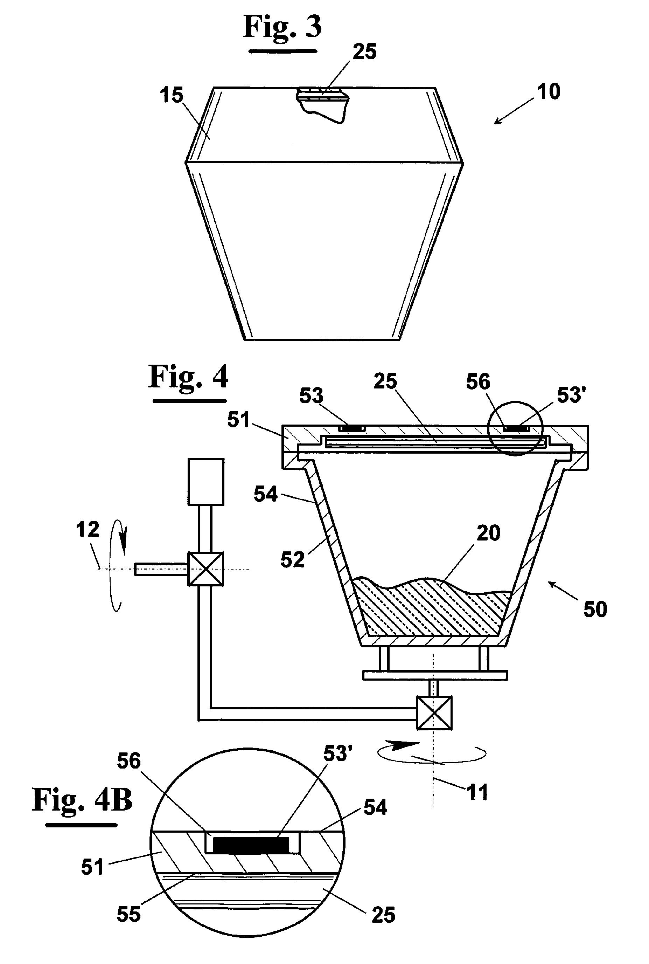

The machine 100 comprises, furthermore, means 53 for constraining a stiff core 25, for example of metal, in the mould 50 near the inner surface 55 thereof. During the moulding step, the stiff core 25 sinks in the molten thermoplastic material and remains thus integrated in the bulk of thermoplastic solid material that is the body of the resulting reservoir 10 (figures 2 and 3).

In particular, the means 53 for constraining the stiff core 25 in the mould 50 can be selected from the group comprised of: one, or more bolts, or similar elements, (figure 1), or one or more magnets 53' (figure 3), or still by one or more points of gluing made by the thermoplastic material same.

As shown in detail in figure 4B, the means 53 for constraining the stiff core 25 in the mould 50 can be arranged in a housing 56 made on the outer surface 54 of the mould 50. This solution is particularly advantageous if of the magnets 53' are used, since making the housing 56 represents an actual reduction of the thickness of the mould 50 and ensures, thenm that the magnet 53' can apply its force of attraction on the metal core 25.

Alternatively, it is possible to provide in the mould 50 one or more through holes 59 crossed in use by the means for constraining the stiff core 25 in the mould 50 (figures 1, 2, 11B).

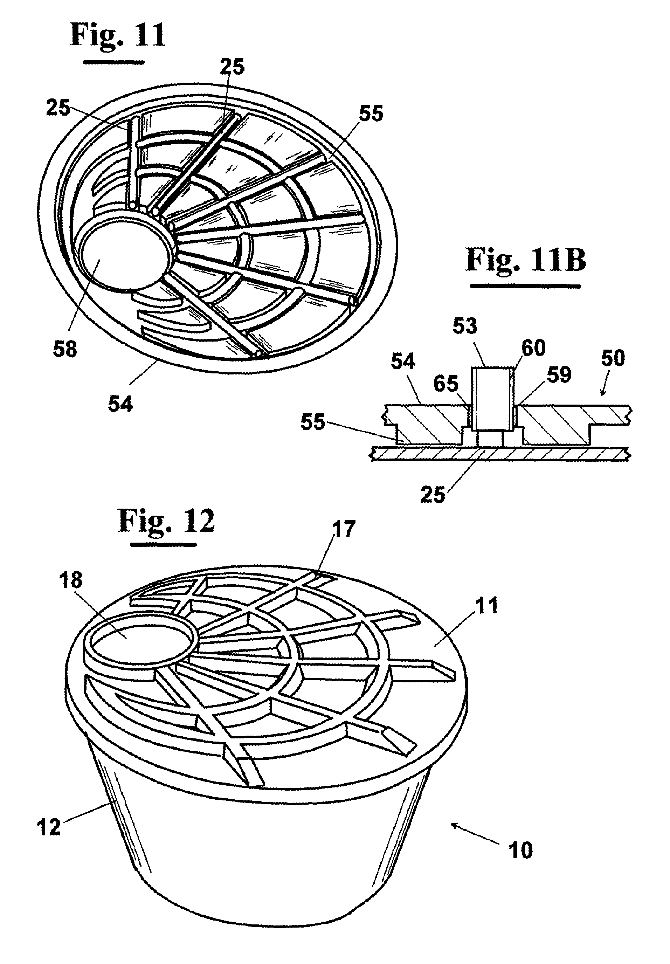

At each through hole 59 it is possible to engage a screw 53, or a magnet 53', the latter equipped with, for example, a screw threaded portion 60 adapted to screwing in a portion 65 of the hole 59 to it complementary. The magnet 53' presents in this case a face protruding in the mould 50 at the inner surface 55 (figure 11B). If screws 53 are used, they can be screwed in dead holes 28 made on the portion of the stiff core 25 that faces towards the inside surface 55 of the mould 50. Alternatively, the screws 53 can be screwed to stiff core 25 in through holes made on it, but screwing them in they without causing them to exit from the recess of the mould 50. This way, the production is avoided of apertures in the hollow body 10 once ended the rotational moulding process.

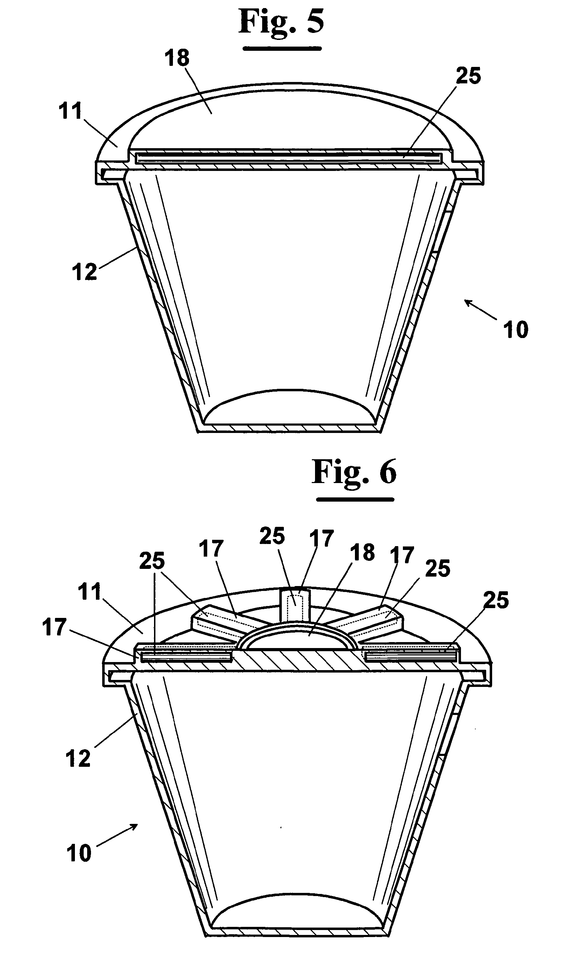

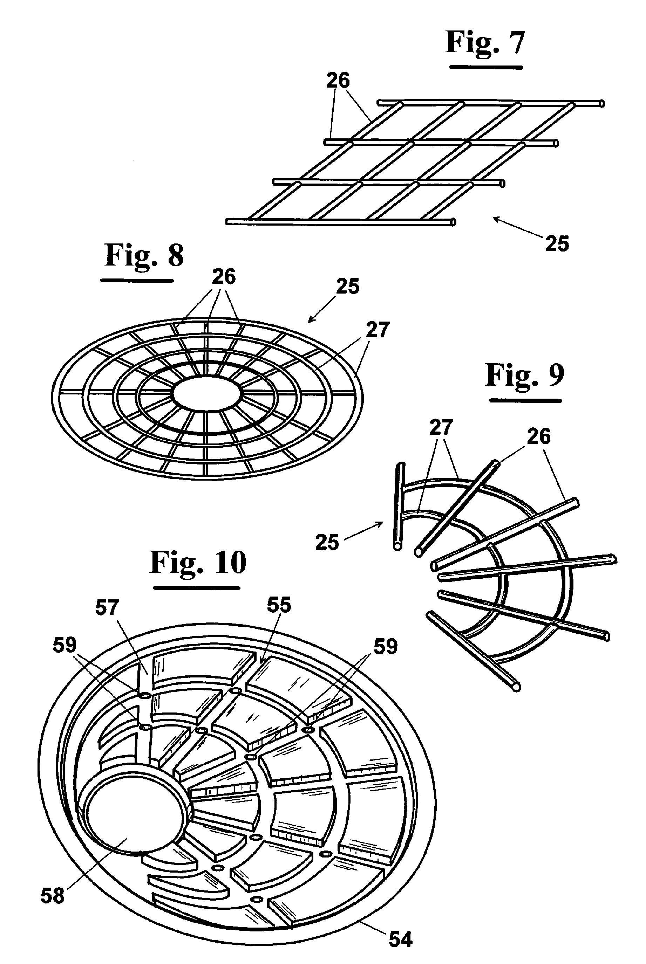

The inner surface 55 of the mould 50 can be equipped with a groove 57, designed according to a determined mesh, in order to provide a stiffening bead 17 with complementary shape on the corresponding surface of the hollow body 10. For example, the groove 57 can be determined on the portion 51 of the mould 50 corresponding to the upper surface 11 of the final reservoir 10 (figures 10 and 12). The groove 57 may have different forms and may extend in a substantial wayly uniform on the upper surface 11 of the reservoir 10 (figure 5), or alternatively, it may comprise a plurality of disjoined segments (figure 6) that can be fitted at one end forming a circular portion 18 at which the resulting reservoir 10 is cut to make an opening.

In an alternative exemplary embodiment, which is diagrammatically shown in figure 2, the stiff core 25 may have a three-dimensional configuration that follows substantially the shape of the inner surface 55 of the mould 50. In this case, the stiff core 25 provides the skeleton of the resulting reservoir 10.

Also stiff core 25 can be made of a single part shaped in order to result complementary to groove 57 and comprise in general rectilinear segments 26 and curvilinear segments 27 fixed for example by welding in order to form a net with desired shape (figures 7, 8 and 9), or alternatively, consisting of several portions disjoined. In both cases, the stiff core 25 is housed in the groove 57 and there constrained by the engagement means 53 in order to remain embedded in the molten thermoplastic material that is moulded in the groove 57 during the rotational moulding step. This way, the stiff core 25 is incorporated at the stiffening bead 17 of the hollow body 10 resulting therefrom. This allows to improve further the mechanical resistance of the structure of the hollow body 10, already high for the presence of the beads 17.

As stated above, the stiff core 25 can be integrated in reservoir 10 at the upper surface 11. The stiffening of reservoir 10 by a combined action of the stiff core 25 and of the beads 17 allows its use also in conditions for which it has to be adapted to vehicles of pedestrian transit exceeding thus the limit existing up to now to the use of reservoirs of plastic material.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Machine for rotational moulding to obtain a hollow body in a single part of thermoplastic material, in particular a reservoir, said machine comprising:
- a hollow mould having an outer surface and an inner surface, said inner surface being shaped in order to reproduce the shape of the side surface of said hollow body, said mould being adapted to receive in use a measured amount of a thermoplastic material,
- heating means associated with said mould, said heating means being adapted to cause said thermoplastic material contained in said mould to melt,
- a support structure for said mould,
- means for actuating said mould with respect to said support structure, said means for actuating obtaining a combination of rotations about at least a first and a second axis orthogonal to each other, said combination of rotations being adapted to lay uniformly said molten thermoplastic material on said inner surface of said mould,
**characterised in that** it provides furthermore, means for constraining at least one stiff core to said mould within the mould, said or each stiff core sinking in said molten thermoplastic material during the moulding step in order to remain integrated in the structure of said resulting hollow body.

2. Machine, according to claim 1, wherein said means for constraining said stiff core in said mould are arranged in a housing made on said outer surface of said mould.

3. Machine, according to claim 1, wherein said means for constraining said stiff core in said mould are selected from the group comprised of:
- at least one magnet,
- at least one screw,
- at least one nail,
- at least one point of gluing, for example by a point of thermoplastic material,
- a combination thereof.

4. Machine, according to claim 1, wherein said stiff core is made of a material selected from the group comprised of:
- metal material,
- plastic material,
- material wooden,
- a combination thereof.

5. Machine, according to claim 1, wherein said stiff core can be selected from the group comprised of:
- a rectilinear segment,
- a curvilinear segment,
- a planar net with a determined mesh,
- a three-dimensional net having a determined mesh.

6. Machine, according to claim 1, wherein said means for constraining to said inner surface said or each stiff core comprises at least one magnet arranged around said mould and having a portion that faces said mould at said inner surface.

7. Machine, according to claim 1, wherein said inner surface of said mould has at least one groove adapted to determine a stiffening bead on the corresponding outer surface of said hollow body, said stiff core being engaged in said groove in order to remain embedded in said molten thermoplastic material that afflows inside during the moulding.

8. Machine, according to claim 1, wherein said inner surface of said mould has said groove at the portion that in use works as cover.

9. Machine, according to claim 1, wherein said thermoplastic material is selected from the group comprised of: polyethylene, polypropylene, PVC, polyamide, polycarbonate, polyurethane, PET, which can be mixed at moulding or overlapped in layers with reinforcing elements such as: foams, fibres, caric.

10. Method for making a hollow body of plastic material, in particular a reservoir, comprising the steps of:
- introducing a measured amount of a charge of thermoplastic material in a mould having an outer surface and an inner surface, said inner surface being shaped in order to reproduce the shape of the side surface of said hollow body,
- heating the mould in order to cause the charge of thermoplastic material to melt,
- spatially moving the mould through a combination of rotations about at least a first and a second axis to ensure a homogeneous distribution of the molten thermoplastic material on the inner walls of the mould,
- cooling the mould and extracting the resulting hollow body from said mould,
**characterised in that** it provides a preliminary step of engaging at least one stiff core in said mould near said inner surface, said stiff core sinking in said molten thermoplastic material during the moulding step in order to remain integrated in said resulting hollow body from.

11. Hollow body, in particular a reservoir, comprising a side surface, a base and a cover made of a single part of thermoplastic material obtained for rotational moulding **characterised in that** of having at least one stiff core integrated in the bulk of said thermoplastic material.

12. Hollow body, according to claim 11, wherein at least one stiffening bead on the outer surface of said hollow body is provided, said stiff core being integrated in said mass of said thermoplastic material at said stiffening bead.

13. Hollow body, according to claim 11, wherein said stiff core is integrated in said mass of said thermoplastic material of said hollow body at the portion that in use works as cover.

14. Hollow body, according to claim 11, **characterised in that** of being selected from the group comprised of:
- a reservoir for liquid,
- a Imhoff reservoir,
- a reservoir adapted to be embedded in earth.

15. Hollow body, according to claim 11, wherein said thermoplastic material is selected from the group comprised of: polyethylene, polypropylene, PVC, polyamide, polycarbonate, polyurethane, PET, which can be mixed at moulding or overlapped in layers with reinforcing elements such as: foams, fibres, charge.
